# EUROPÄISCHE PATENTSCHRIFT

(11) **EP 3 501 815 B1**
(45) Veröffentlichungstag und Bekanntmachung des Hinweises auf die Patenterteilung: **01.09.2021**
(21) Anmeldenummer: 18213405.6
(22) Anmeldetag: 18.12.2018
(51) Int. Cl.: B32B 5/14, B32B 15/06, B32B 25/04, B32B 25/18, B32B 33/00, B32B 3/26, B60J 5/04, B60R 13/08, E04B 1/84

(54) **VERKLEIDUNGSELEMENT UND VERFAHREN ZUM ENTDRÖHNEN EINES BAUTEILS SOWIE VERFAHREN ZUM HERSTELLEN EINES VERKLEIDUNGSELEMENTS UND VERWENDUNG EINES VERKLEIDUNGSELEMENTS**
CLADDING ELEMENT AND METHOD FOR DAMPING A COMPONENT AND METHOD FOR PRODUCING A CLADDING ELEMENT AND USE OF A CLADDING ELEMENT
ÉLÉMENT DE REVÊTEMENT ET PROCÉDÉ D'INSONORISATION D'UN COMPOSANT AINSI QUE PROCÉDÉ DE FABRICATION D'UN ÉLÉMENT DE REVÊTEMENT ET UTILISATION D'UN ÉLÉMENT DE REVÊTEMENT

(30) Priorität: 22.12.2017 DE 102017131075
(43) Veröffentlichungstag der Anmeldung: 26.06.2019
(73) Patentinhaber: Odenwald-Chemie GmbH, 69250 Schönau (DE)
(72) Erfinder: SCHWAMMBERGER, Torsten, 74862 Binau (DE)
(74) Vertreter: Müller Schupfner & Partner Patent- und Rechtsanwaltspartnerschaft mbB

(56) Entgegenhaltungen:
- WO-A1-2015/185757
- DE-U- 1 883 292
- DE-U1-202008 018 378

## Beschreibung

Die vorliegende Erfindung betrifft ein Verkleidungselement und ein Verfahren zum Entdröhnen eines Bauteils sowie ein Verfahren zum Herstellen eines Verkleidungselements und eine Verwendung eines Verkleidungselements.

Verkleidungselemente zum Entdröhnen sind aus dem Stand der Technik hinlänglich bekannt und werden beispielsweise in Fahrzeugen dazu benutzt, einer Geräusch- bzw. Schallbildung durch im Betrieb vibrationsanfällige Karosserieteile, wie z. B. einer Fahrzeugtür, entgegenzuwirken bzw. diese zu unterdrücken. Wesentlicher Bestandteil des Verkleidungselements ist eine Entdröhnungsschicht, die üblicherweise aus Butyl gefertigt ist. Typischerweise wird die Entdröhnungsschicht mit einer Anordnungsseite flächig an das zu entdröhnende Bauteil stoffschlüssig und/oder formschlüssig angebunden und wegen des vergleichsweise hohen Flächengewichts der butylhaltigen Entdröhnungsschicht lässt sich ein akustisches Verhalten des Bauteils in der gewünschten Weise positiv beeinflussen. Auf einer der Anordnungsseite gegenüberliegenden Außenseite ist regelmäßig eine dünne Aluminiumschicht vorgesehen, die im Wesentlichen als Träger für die Entdröhnungsschicht dient. Ein Beispiel für ein solches Verkleidungselement wird unter der Bezeichnung "Butylene ALU SOUND I T 255" von der Firma Isoltema/Olin® sowie Sonit Alu/Butyl von der Firma Steinbach vertrieben.

Aus der DE 18 83 293 U ist eine selbsttragende Schalldämmplatte für Fahrzeugwände, bestehend aus mehreren Schichten aus elastischen Werkstoffen bekannt, wobei ein Gittergerüst aus Metall als Trägerschicht in den elastischen Werkstoff eingebettet ist.

Die WO 2015 185 757 A1 beschreibt eine Vorrichtung zur Entdröhnung eines Bauteils mit einer Dämpfungsschicht aus einem geschäumten Material.

Die DE 2008 018 378 U1 offenbart ein Klebeelement mit eine Dämpfungsmasse aus Butylkautschuk.

Vor diesem Hintergrund macht es sich die vorliegende Erfindung zur Aufgabe, ein Verkleidungselement bereitzustellen, das gegenüber den aus dem Stand der Technik bekannten Verkleidungselementen, insbesondere in Hinblick auf seine Entdröhnungseigenschaften, weiter verbessert ist.

Die Aufgabe wird erfindungsgemäß durch ein Verkleidungselement mit den Merkmalen des Anspruchs 1, ein Verfahren zum Entdröhnen eines Bauteils mit den Merkmalen des Anspruchs 13 und ein Verfahren zum Herstellen eines Verkleidungselements mit den Merkmalen des Anspruchs 14 sowie eine Verwendung eines Verkleidungselements gemäß Anspruch 15 gelöst. Bevorzugte Ausgestaltungen der Erfindung sind in den abhängigen Ansprüchen sowie der nachfolgenden Beschreibung, insbesondere im Zusammenhang mit den beiliegenden Figuren, angegeben.

Erfindungsgemäß ist ein Verkleidungselement zum Entdröhnen eines Bauteils, insbesondere eines Fahrzeugbauteils, vorgesehen, umfassend eine sich im Wesentlichen entlang einer Haupterstreckungsebene erstreckende Entdröhnungsschicht und ein Versteifungselement, wobei das Versteifungselement in oder an der Entdröhnungsschicht angeordnet und gitterförmig ausgestaltet ist. Gegenüber dem Stand der Technik erweist sich das erfindungsgemäße Versteifungselement, das gitterförmig ausgestaltet ist, als vorteilhaft, da sich das gitterförmige Versteifungselement zur Einstellung einer Steifigkeit des Verkleidungselements nutzen lässt. Insbesondere ist es hierbei vorgesehen, dass das gitterförmige Versteifungselement derart konfiguriert bzw. ausgeformt ist, dass sich die Steifigkeit des Verkleidungselement erhöht, insbesondere im Vergleich zu einem baugleichen Verkleidungselement mit einer Entdröhnungsschicht und einer geschlossenen, d. h. freiflächenfreien, Metallschicht an der Außenseite. Unter baugleich versteht der Fachmann hier insbesondere, dass die Entdröhnungsschicht und das Verseifungselement in einer senkrecht zur Haupterstreckungsebene verlaufenden Richtung im Vergleich zu dem System aus Entdröhnungsschicht und Metallschicht jeweils gleich dick sind. Infolge der erhöhten Steifigkeit wird in vorteilhafter Weise durch einen erhöhten Verlustfaktor die Entdröhnungswirkung des Verkleidungselements signifikant verbessert. Dies gestattet es beispielsweise auch bei gleicher Entdröhnungswirkung das Verkleidungselement dünner und somit leichter zu gestalten. Weiterhin ist es vorzugsweise vorgesehen, dass die Haupterstreckungsebene im Wesentlichen plan verläuft und sich das Versteifungselement im Wesentlich parallel zur Haupterstreckungsebene erstreckt. Dabei ist das Versteifungselement für das Verkleidungselement formbestimmend und gibt somit im Wesentlichen die Ausrichtung der Entdröhnungsschicht entlang der Haupterstreckungsebene vor. Vorzugsweise ist das Versteifungselement und/oder das Verkleidungselement plastisch verformbar, insbesondere derart, dass das Verkleidungselement beispielsweise einem gekrümmten Konturverlauf eines gewölbten Teilabschnitts am Bauteil folgen kann. Grundsätzlich ist als gitterförmig jede Gestaltung mit Aussparungen bzw. Freiflächen zu verstehen, die sich entlang der Haupterstreckungsebene regelmäßigen oder unregelmäßigen verteilen. Vorstellbar ist beispielswiese auch eine Lochplatte. Als besonders vorteilhaft hat es sich herausgestellt, wenn das gitterförmige Versteifungselement in die Entdröhnungsschicht eingebettet oder eingelassen ist. In Folge dieser Anordnung des gitterförmigen Versteifungselements in der Entdröhnungsschicht werden im Wesentlichen plane bzw. ebene bzw. glatte Seitenflächen bzw. Oberflächen bereitgestellt, die sich beispielsweise als vorteilhaft für das Anbinden weiterer Schichten an das Verkleidungselement erweisen. Vorzugsweise ist das Verkleidungselement für die Entdröhnung eines Fahrzeugkarosserieteils vorgesehen. Insbesondere wird das Verkleidungselement dabei an eine auf den Fahrzeuginnenraum gerichtete Seite des Bauteils montiert.

Vorzugsweise ist die Entdröhnungsschicht derart gestaltet, dass sie selbstklebend ist und selbst als Haftvermittler für die Anbindung an das Bauteil dient. Beispielsweise wird das Verkleidungselement stoffschlüssig mit dem Bauteil verbunden. Weiterhin ist es bevorzugt vorgesehen, dass sich das Versteifungselement über die gesamte Erstreckung der Entdröhnungsschicht entlang der Haupterstreckungsebene miterstreckt.

Vorzugsweise ist das Versteifungselement unbehandelt, insbesondere wärmbehandlungsfrei, ausgestaltet. Unter einem unbehandelten Versteifungselement ist insbesondere ein solches zu verstehen, dessen Steifigkeit durch Behandlungsmaßnahmen während dessen Fertigung oder danach nicht reduziert wurde. Dadurch lässt sich mit Vorteil die gewünschte Steifigkeit für das Verkleidungselement realisieren. Insbesondere wird das Versteifungselement nicht wärmebehandelt, da eine solche Wärmebehandlung zu einer Reduktion der Steifigkeit führen würde. Als Maß für die Steifigkeit zieht der Fachmann vorzugsweise ein Biegemoment für das Versteifungselement heran und unter einem unbehandeltem Versteifungselement versteht er ein solches, dessen Biegemoment durch Fertigungsmaßnahmen bzw. Nachbearbeitungsmaßnahmen gegenüber dem ursprünglichen Biegemoment nicht um mehr als 10 % (des ursprünglichen Biegemoments) abgesenkt bzw. reduziert ist.

Zweckmäßig weist das Versteifungselement erste Streben und zweite Streben auf, die derart ausgerichtet sind, dass sie Freiflächen voneinander trennen, wobei vorzugsweise ein in der Haupterstreckungsebene bemessenes Flächenverhältnis der ersten Streben und/oder der zweiten Streben zu den Freiflächen einen Wert zwischen 0,01 und 0,8, bevorzugt zwischen 0,05 und 0,65 und besonders bevorzugt zwischen 0,1 und 0,26 annimmt. Dadurch lässt sich ein Versteifungselement bereitstellen, dessen Freiflächen größer sind als der von den ersten bzw. zweiten Streben eingenommene Bauraum bzw. Fläche. Im innerhalb der Entdröhnungsschicht verbauten Zustand durchgreift die Entdröhnungsschicht dann die Freiflächen und füllt diese, insbesondere vollständig. Infolgedessen lässt sich eine dauerhafte Integration des Versteifungselements in die Entdröhnungsschicht realisieren. Insbesondere für das Verhältnis zwischen 0,1 und 0,26 wird ein Versteifungselement mit der gewünschten Steifigkeit bereitgestellt, das zudem wegen des hohen Freiflächenanteils vergleichsweise leicht ist.

Zweckmäßig weist die Freiflächen in der Haupterstreckungsebene einen polygonalen Querschnitt, beispielsweise einen quadratischen, rautenförmigen, fünfeckigen, sechseckigen oder anderen Querschnitt, auf. Vorstellbar sind aber auch ovale, runde, gebogene, teilgebogen oder andersförmige Querschnitte. Weiterhin ist es denkbar, dass ein Versteifungselement mehrere verschiedenartige Querschnittsformen für die Freiflächen aufweist. Dadurch lässt sich das Versteifungselement bedarfsabhängig anpassen.

Vorzugsweise ist das Versteifungselement aus einem Metall, insbesondere Aluminium, gefertigt und/oder die Entdröhnungsschicht umfasst erfindungsgemäß Butyl bzw. Butylkautschuk. Grundsätzlich ist es vorstellbar, dass die Entdröhnungsschicht aus Bitumen oder einem Harz gefertigt ist. Gegenüber diesen Materialien erweist sich Butylkautschuk unteranderem als vorteilhaft, weil es eine niedrigere Neigung zur Verglasung aufweist und weniger temperatursensibel ist. Ein Versteifungselement aus Aluminium ist vergleichsweise einfach herzustellen und hat ein vergleichsweise geringes Eigengewicht. Vorstellbar ist auch, dass das Versteifungselement aus einem Kunststoff gefertigt ist, dessen Schmelztemperatur ausreichend hoch ist, dass der Kunststoff beim Zusammenfügen der Entdröhnungsschicht und des Versteifungselements nicht schmilzt.

Vorzugsweise weist die Entdröhnungsschicht ein Flächengewicht zwischen 1 kg/m² und 8 kg/m², bevorzugt zwischen 2,5 kg/m² und 6,5 kg/m² und bevorzugt zwischen 3,5 kg/m² und 4,5 kg/m² auf. Es hat sich insbesondere für eine Butyl umfassende Entdröhnungsschicht mit einem Flächengewicht zwischen 3,5 kg/m² und 4,5 kg/m² gezeigt, dass dadurch ein für die Entdröhnung vorteilhaftes Gewicht am Bauteil bereitgestellt werden kann, ohne dass es zu viel Bauraum in Anspruch nimmt. Insbesondere weist die Entdröhnungsschicht eine Dichte zwischen 0,5 und 2,5 kg/m³, bevorzugt zwischen 0,75 und 2,25 kg/m³ und besonders bevorzugt zwischen 1 und 2 kg/m³ auf.

Ferner ist es vorstellbar, dass die Entdröhnungsschicht ein Flächengewicht zwischen 0,5 kg/m² und 2,5 kg/m², bevorzugt zwischen 0,75 und 2,25 kg/m² und besonders bevorzugt zwischen 1 und 2 kg/m² aufweist. Alternativ kann das Flächengewicht einen Wert zwischen 7,5 kg/m² und 10 kg/m², bevorzugt zwischen 8 und 9 kg/m² und besonders bevorzugt zwischen 8 und 8,5 kg/m² aufweisen. Weiterhin ist es bevorzugt vorgesehen, dass die Entdröhnungsschicht ein porenfreies Material umfasst, insbesondere frei von einem Schaumstoff ist. Dadurch kann auf bauraumfüllende Schaumstoffmaterialien verzichtet werden.

In einer weiteren bevorzugten Ausführungsform ist es vorgesehen, dass das Verkleidungselement neben dem Versteifungselement ein weiteres Versteifungselement aufweist, das gitterförmig ausgestaltet ist und in und/oder an der Entdröhnungsschicht angeordnet ist. Dabei ist das weitere Versteifungselement vorzugsweise vom Versteifungselement beabstandet angeordnet. Durch einen entsprechend dimensionierten Abstand zwischen dem Versteifungselement und dem weiteren Versteifungselement lassen sich beispielsweise Kanten und/oder Absätze im Profil des zu entdröhnenden Objekts überbrücken bzw. verkleiden, vorzugsweise ohne das Versteifungselement zu stark zu verbiegen. D. h. in einem Kantenbereich bzw. Absatzbereich wird das zu entdröhnende Objekt bevorzugt nur von der Entdröhnungsschicht ummantelt und nicht von dem Versteifungselement.

Weiterhin ist es bevorzugt vorgesehen, dass das Versteifungselement und/oder das weitere Versteifungselement jeweils flächig ausgestaltet sind und kachelförmig im Verkleidungselement angeordnet sind.

Weiterhin ist es bevorzugt vorgesehen, dass das Verkleidungselement zumindest einen Teilbereich aufweist, in dem das Versteifungselement frei von der Entdröhnungsschicht ist. Mit diesem Teilbereich lässt sich beispielsweise ein Bereich am zu entdröhnenden Objekt überbrücken, der keiner oder nur einer geringen Entdröhnung bedarf. Entsprechend lässt sich in vorteilhafter Weise Material einsparen.

Bevorzugt ist es vorgesehen, dass ein Verhältnis von versteifungselementfreien Abschnitten zur gesamten Fläche des Verkleidungselements einen Wert zwischen 0,05 und 0,2, bevorzugt zwischen 0,1 und 0,15 und besonderes bevorzugt zwischen 0,1 und 0,13 annimmt.

Denkbar ist ferner, dass versteifungsfreie Abschnitte am Rand des Verkleidungselements ausgebildet sind. Dadurch lässt sich zusätzlich in vorteilhafter Weise sicherstellen, dass das Versteifungselement nach einer gewissen Benutzung des Verkleidungselements nicht aus der Entdröhnungsschicht herausragt und ein Verletzungsrisiko darstellt.

Zweckmäßig weist die Entdröhnungsschicht einen Füllstoff auf. Mittels des Füllstoffs lässt sich das Flächengewicht und die innere Reibung in vorteilhafter Weise bedarfsabhängig einstellen. Vorzugsweise ist der Füllstoff derart gestaltet, dass er keine Wirkung auf das Material des Versteifungselements hat. Dadurch kann mit Vorteil eine dauerhaft sichere Verbindung zwischen dem Versteifungselement und der Entdröhnungsschicht sichergestellt werden.

Zweckmäßig weist die Entdröhnungsschicht in einer senkrecht zur Haupterstreckungsebene verlaufenden Richtung eine erste Dicke auf, wobei die erste Dicke einen Wert zwischen 1 mm und 8 mm, bevorzugt zwischen 1,2 und 6 mm und besonders bevorzugt zwischen 4 mm und 6 mm aufweist oder im Wesentlichen einen Wert von 4,5 mm annimmt. Eine solche Dimensionierung gewährleistet, dass das Verkleidungselement einen primären Zweck oder eine primäre Aufgabe des Bauteils nicht einschränkt bzw. zu viel Bauraum im montierten Zustand in Anspruch nimmt.

Zweckmäßig weist das Versteifungselement in einer senkrecht zur Haupterstreckungsebene verlaufenden Richtung eine zweite Dicke auf, wobei ein Verhältnis der zweiten Dicke zur ersten Dicke einen Wert zwischen 0,01 und 1, bevorzugt zwischen 0,015 und 0,45 und besonders bevorzugt zwischen 0,02 und 0,2 annimmt. Insbesondere lässt sich mit Vorteil durch das Einstellen des Verhältnisses zwischen der ersten Dicke und der zweiten Dicke das akustische Verhaltung bedarfsabhängig, d. h. individuell auf den jeweiligen Anwendungsfall, anpassen bzw. dafür optimiert bereitstellen. Insbesondere für ein Verhältnis zwischen 0,02 und 0,2 wird hierbei eine Mehrzahl von Anwendungsfällen abgedeckt, so dass sich ein Verkleidungselement mit dem besagten Verhältnis vergleichsweise vielseitig einsetzten lässt.

Vorzugsweise weist das Verkleidungselement eine Anordnungsseite, die im montiertem Zustand des Verkleidungselements dem Bauteil zugewandt ist, und eine der Anordnungsseite gegenüberüberliegende Außenseite auf, wobei das Versteifungselement zwischen der Anordnungsseite und der Außenseite angeordnet ist. Insbesondere wird das Verkleidungselement mit der Anordnungsseite, insbesondere mit der im Wesentlichen gesamten Anordnungsseite, unmittelbar an das Bauteil angebunden, vorzugsweise stoffschlüssig angebunden. Hierzu wird vorzugsweise eine von dem die Entdröhnungsschicht bildenden Material, insbesondere Butylkautschuk umfassenden Material, ausgehende Klebkraft zur Anbindung an das Bauteil genutzt. Weiterhin ist es vorgesehen, dass das Verkleidungselement zeitlich vor seiner Montage mit einer abziehbaren Abdeckfolie bereitgestellt wird, die wiederum vor der Montage abgenommen, insbesondere abgezogen, werden kann. Dadurch lässt sich mit Vorteil ein Klebkraftverlust während der Lagerung des Verkleidungselements vermeiden. Weiterhin ist es vorgesehen, dass die Anordnungsseite und die Außenseite zueinander parallel verlaufen und in einer senkrecht zur Haupterstreckungsebene verlaufenden Richtung gesehen einander gegenüberliegen.

Zweckmäßig ist das Versteifungselement in einer senkrecht zur Haupterstreckungsebene verlaufenden Richtung gesehen um einen ersten Abstand von der Anordnungsseite und um einen zweiten Abstand von der Außenseite versetzt, wobei der erste Abstand größer ist als der zweite Abstand. Somit ist das Versteifungselement nicht mittig bzw. zentral in der Entdröhnungsschicht angeordnet, sondern zur Außenseite hin versetzt. Dadurch lässt sich eine Entdröhnungswirkung des Verkleidungselements weiter verbessern, da das Versteifungselement im montierten Zustand die Entdröhnung auf der dem Bauteil gegenüberliegenden Seite unterstützt.

Besonders bevorzugt nimmt ein Verhältnis des zweiten Abstands zum ersten Abstand einen Wert zwischen 0,65 und 0,98, bevorzugt zwischen 0,75 und 0,98 und besonders bevorzugt zwischen 0,85 und 0,95 an. Es hat sich mit Vorteil gezeigt, dass die Entdröhnungswirkung zunimmt, umso weiter das Versteifungselement vom Bauteil entfernt ist, insbesondere also für ein Verhältnis des zweiten Abstands zum ersten Abstand zwischen 0,85 und 0,95.

Vorzugsweise ist eine Schallabsorptionsschicht an der Außenseite des Verkleidungselements angeordnet. Dank der Schallabsorptionsschicht lässt sich mittels des Verkleidungselements nicht nur eine Entdröhnung bewirken, sondern das Verkleidungselement kann zusätzlich zur Absorption von Schall bzw. Geräuschen genutzt werden, insbesondere zur Absorption von Schallschwingungen mit vergleichsweise hohen Frequenzen. Infolgedessen braucht der Nutzer nur ein Verkleidungselement am Bauteil anzubringen, um Entdröhnung und Schallabsorption zu realisieren. Mit Vorteil umfasst die Schallabsorptionsschicht ein Vlies oder einen Schaumstoff. Dabei ist es vorzugsweise vorgesehen, dass zur Erhöhung der Absorption vergleichsweise dünne Fasern für das Vlies gewählt werden. Ferner ist es vorstellbar, dass alternativ oder ergänzend ein Absorptionsvermögen des Vlieses durch eine Faserzusammensetzung oder das Flächengewicht der Schallabsorptionsschicht eingestellt wird. Beispielsweise weist die Schallabsorptionsschicht ein Flächengewicht zwischen 100 und 2000 g/m², bevorzugt zwischen 150 und 1000 g/m² und besonders bevorzugt zwischen 230 und 430 g/m². Als Materialien für die Schallabsorptionsschicht sind auch Polyesterfasern, Baumwollfasern, Fasern aus Thiosulfat oder ein Polyurethanschaumstoff vorstellbar. Beispielsweise ist an der Außenseite des Verkleidungselements eine 12 bis 18 mm dicke Schallabsorptionsschicht aus einem Polyester angeordnet mit einem Flächengewicht von 350 g/m². Vorzugsweise ist es vorgesehen, dass die Schallabsorptionsschicht auf das Verkleidungselement, insbesondere auf die Außenseite des Verkleidungselements, aufkaschiert wird. Für eine dauerhafte Anbindung, die auch den im Einsatz des Verkleidungselement auftretenden Belastungen standhält, ist es vorgesehen, dass die Anbindung der Schallabsorptionsschicht bei einer Temperatur zwischen 80 °C und 150 °C erfolgt. Vorzugsweise erfolgt das Fügen der Schallabsorptionsschicht mit dem Verkleidungselement unter Druck.

Zweckmäßig ist die Schallabsorptionsschicht hydrophob. Dadurch lässt sich das Verkleidungselement mit Vorteil in Nassbereichen bzw. in Nassumgebungen verwenden, ohne dass die Schallabsorptionsschicht Feuchtigkeit aufnimmt. Beispielsweise wird hierzu eine im Vorfeld entsprechend präparierte, beispielsweise getränkte oder beschichtete, Schallabsorptionsschicht verwendet.

Vorzugsweise weist die Schallabsorptionsschicht in der senkrecht zur Haupterstreckungsebene verlaufenden Richtung eine dritte Dicke auf, wobei die dritte Dicke einen Wert zwischen 1 mm und 30 mm, bevorzugt zwischen 3 mm und 25 mm und besonders bevorzugt zwischen 13 und 18 mm aufweist. Vorzugsweise nimmt das Verhältnis der ersten Dicke zu der dritten Dicke einen Wert zwischen 0,06 und 1,5, bevorzugt zwischen 0,1 und 1 und besonders bevorzugt zwischen 0,28 und 0,38 an.

Vorzugsweise überschneiden bzw. treffen sich die ersten Streben und die zweiten Streben in Knotenpunkten, wobei Knotenpunkte in einer Querrichtung über eine erste Distanz zueinander beabstandet sind und in einer senkrecht zur Querrichtung verlaufenden Längsrichtung über eine zweite Distanz zueinander beabstandet sind, wobei sich insbesondere die erste Distanz von der zweiten Distanz unterscheidet. Hierdurch wird ein sogenanntes Strech-Gitter geschaffen, welches beispielsweise eine rautenförmige Konfiguration aufweisen kann. Dabei ist unter einem Knotenpunkt insbesondere eine Schnittstelle zwischen den ersten und der zweiten Strebe zu verstehen, ohne dass diese hier übereinander angeordnet sein müssen. Vorzugsweise sind die ersten Streben und die zweiten Streben in den Knotenpunkten, insbesondere starr, miteinander verbunden. Weiterhin ist es bevorzugt vorgesehen, dass ein Verhältnis zwischen der ersten Distanz zu der zweiten Distanz einen Wert zwischen 0,65 und 0,95, bevorzugt zwischen 0,75 und 0,93 und besonders bevorzugt zwischen 0,83 und 0,92 annimmt. Durch diese geometrische Ausgestaltung lässt sich die Steifigkeit beeinflussen, insbesondere lassen sich unterschiedliche Steifigkeiten in verschiedene Richtungen, die parallel zur Haupterstreckungsebene verlaufen, einstellen.

Vorzugsweise ist das Versteifungselement im Knotenpunkt verdickt. Dadurch lässt sich der Knotenpunkt mit Vorteil materiell verstärken. Dabei ist das Versteifungselement im Knotenpunkt insbesondere entlang der Querrichtung oder der Längsrichtung verbreitert ausgestaltet.

Ein weiterer Gegenstand der vorliegenden Erfindung ist ein Verfahren zum Entdröhnen eines Bauteils, insbesondere eines Fahrzeugbauteils, wobei das erfindungsgemäße Verkleidungselement mit dem Bauteil, insbesondere form- und/oder stoffschlüssig mit dem Bauteil, verbunden wird. Alle für das erfindungsgemäße Verkleidungselement beschriebenen Merkmale und deren Vorteile lassen sich sinngemäß ebenfalls auf das erfindungsgemäße Verfahren zum Entdröhnen eines Bauteils übertragen und andersherum.

Ein weiterer Gegenstand der vorliegenden Erfindung ist ein Verfahren zum Herstellen eines erfindungsgemäßen Verkleidungselements umfassend:
Bereitstellen einer Entdröhnungsschicht und eines gitterförmigen Versteifungselements, und Zusammenfügen der Entdröhnungsschicht und des gitterförmigen Versteifungselements, vorzugsweise durch Laminieren. Alle für das erfindungsgemäße Verkleidungselement beschriebenen Merkmale und deren Vorteile lassen sich sinngemäß ebenfalls auf das erfindungsgemäße Verfahren zum Herstellen des Verkleidungselements übertragen und andersherum.

Ein weiterer Gegenstand der vorliegenden Erfindung ist eine Verwendung des erfindungsgemäßen Verkleidungselements zum Entdröhnen eines Fahrzeugbauteils, insbesondere eines Fahrzeugkarosseriebauteils. Alle für das erfindungsgemäße Verkleidungselement beschriebenen Merkmale und deren Vorteile lassen sich sinngemäß ebenfalls auf die erfindungsgemäße Verwendung übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- Fig.1:: ein Verkleidungselement für ein Bauteil gemäß einer bevorzugten Ausführungsform der vorliegenden Erfindung und
- Fig.2:: ein Versteifungselement für das Bauteil gemäß der bevorzugten Ausführungsform der vorliegenden Erfindung.

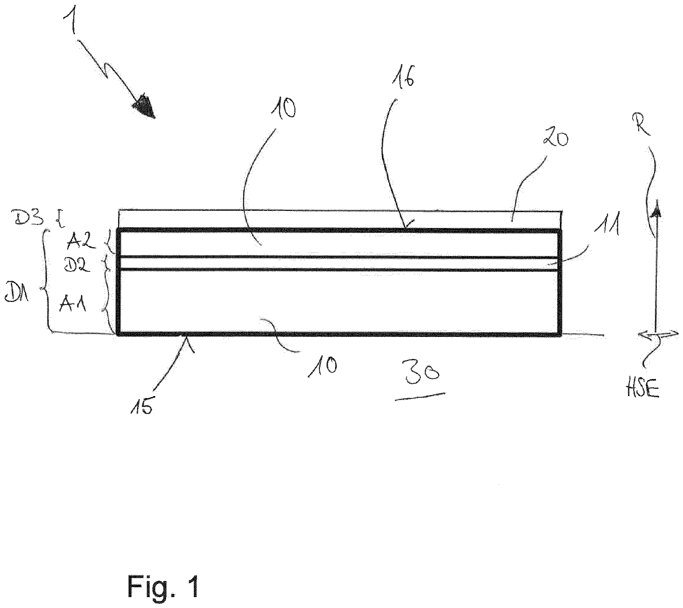

In **Fig. 1** ist ein Verkleidungselement 1 für ein Bauteil 30 gemäß einer bevorzugten Ausführungsform der vorliegenden Erfindung dargestellt. Insbesondere ist das Verleidungselement 1 für Fahrzeugrahmenteile, wie z. B. eine Fahrzeugtür oder ein Fahrzeugdach, vorgesehen, und wird an diesen Bauteilen 30 flächig montiert, um deren akustisches Verhalten zu manipulieren. Vorzugsweise wird das Verkleidungselement 1 auf einer einem Fahrzeuginnenraum zugewandten Seite des Bauteils 30 montiert. Insbesondere dient das Verkleidungselement 1 der Entdröhnung und soll somit der Geräuschbildung durch vibrierende Bauteile entgegenwirken. Wesentlicher Bestandteil des Verkleidungselements 1 ist eine sich entlang einer Haupterstreckungsebene HSE ersteckende Entdröhnungsschicht 10, die insbesondere aus einem Butylkautschuk umfassenden Material oder ausschließlich aus Butyl gefertigt ist. Insbesondere ist es vorgesehen, dass im montierten Zustand die Entdröhnungsschicht 10 über eine Anordnungsseite 15 an das Bauteil 30 gebunden ist, insbesondere stoffschlüssig gebunden ist. Hierzu wird besonders bevorzugt die dem Butyl zukommende eigene Klebekraft genutzt, um so das Verkleidungselement 1 unmittelbar auf das Bauteil 30, insbesondere auf das aus einem Blech geformte Bauteil 30, aufzukleben. Neben der Funktion als Haftvermittler kommt der Entdröhnungsschicht 10 auch die Aufgabe zu, mittels seiner physikalischen Eigenschaften, insbesondere seines Flächengewichts, für die gewünschte Entdröhnung zu sorgen. Dabei hat es sich herausgestellt, dass sich mit einer senkrecht zur Haupterstreckungsebene HSE bemessenen ersten Dicke D1 der Entdröhnungsschicht 11 eine Entdröhnungswirkung durch das Verkleidungselement 1 einstellen bzw. beeinflussen lässt. Weiterhin ist es vorgesehen, dass das Verkleidungselement 1 ein Versteifungselement 11 mit einer in senkrecht zur Haupterstreckungsebene HSE bemessenen zweiten Dicke D2 aufweist. In der in Figur 1 dargestellten Ausführungsform ist es vorgesehen, dass das Versteifungselement 11 innerhalb der Entdröhnungsschicht 10 angeordnet ist. Denkbar wäre aber auch, dass das Versteifungselement 1 auf der der Anordnungsseite 15 gegenüberliegenden Außenseite 16 an der Entdröhnungsschicht 10, d. h. außerhalb der Entdröhnungsschicht 10 angeordnet ist. Vorzugsweise erstreckt sich das Versteifungselement 11 im Wesentlichen parallel zur Haupterstreckungsebene HSE. Es ist aber auch denkbar, dass das Versteifungselement 11 zumindest bereichsweise schräg bzw. leicht geneigt gegenüber der Haupterstreckungsebene HSE verläuft. Beispielsweise könnte sich das Versteifungselement 11 entlang der Haupterstreckungsebene HSE wellenartig erstrecken.

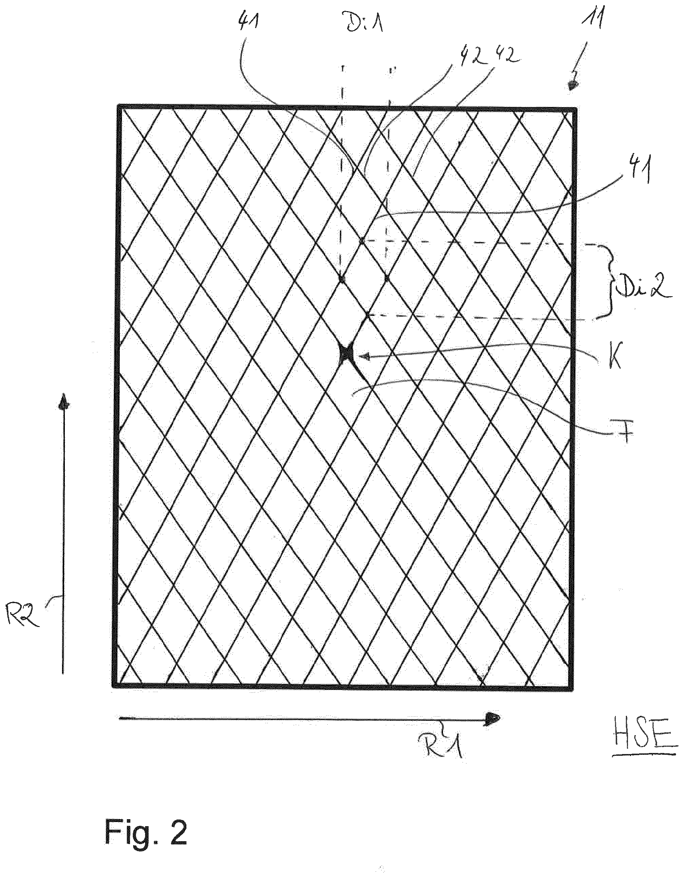

Es hat sich dabei in vorteilhafter Weise herausgestellt, dass sich eine Steifigkeit des Verkleidungselements 1 einstellen, insbesondere vergrößern lässt, wenn das Versteifungselement 11 gitterförmig ausgestaltet ist, d. h. mit einer Vielzahl von Freiflächen F bzw. Aussparungen gemustert ist, wie es beispielsweise in Figur 2 illustriert ist. Vorzugsweise ist es dabei vorgesehen, dass durch die Musterung mit den Freiflächen F die Steifigkeit des Verkleidungselements 1 vergrößert wird im Vergleich zu einem Verkleidungselement 1, dessen Versteifungselement 11 eine im Wesentlichen geschlossene, d. h. freiflächenfreie, Metallschicht, insbesondere Aluschicht, gleicher Dicke aufweist. Vorzugsweise ist es vorgesehen, dass das Versteifungselement 11 in einem ersten Abstand A1 zur Anordnungsseite 15 und in einem zweiten Abstand A2 zur Außenseite 16 in die Entdröhnungsschicht 10 eingelassen ist. Dabei bemisst sich der erste Abstand A1 und der zweite Abstand A2 in einer senkrecht zur Haupterstreckungsebene HSE verlaufenden Richtung R. Vorzugsweise nimmt ein Verhältnis vom zweiten Abstand A2 zum ersten Abstand A1 einen Wert zwischen 0,65 und 0,98, bevorzugt zwischen 0,75 und 0,98 und besonders bevorzugt zwischen 0,85 und 0,95 an. Dadurch ist das Versteifungselement 11 im montierten Zustand in möglichst großer Distanz zu dem Bauteil 30 angeordnet, wodurch sich die Entdröhnungswirkung des Verkleidungselements 1 weiter verbessern lässt. Weiterhin ist es vorgesehen, dass das Versteifungselement 11 plastisch verformbar ist.

Es hat sich weiterhin als vorteilhaft erwiesen, wenn an der Außenseite 16 der Entdröhnungsschicht 10 eine Schallabsorptionsschicht 20 angeordnet ist. Dadurch kann mit Vorteil neben der Entdröhnung zusätzlich eine Schalldämpfung bereitgestellt werden, womit zum Beispiel eine Schallisolierung eines Fahrzeuginnenraums weiter optimiert werden kann. Zudem können Entdröhnung und Schallabsorption mit einem Verbundbauteil realisiert werden, wodurch zur akustischen Optimierung des Bauteils das Anbringen eines einzelnen Verkleidungselement 1 ausreicht, d. h. es lässt sich ein Arbeitsschritt einsparen. Beispielsweise handelt es sich bei der Schallabsorptionsschicht 20 um einen Vlies oder einen Schaumstoff, der in einer senkrecht zur Haupterstreckungsebene HSE verlaufenden Richtung eine dritte Dicke D3 aufweist. Vorzugsweise ist die Schallabsorptionsschicht 20 hydrophob, um zu verhindern, dass das Verkleidungselement 1 in einer feuchten Umgebung Feuchtigkeit aufnimmt. So lässt sich das Verkleidungselement 1 auch in eine Nassumgebung einsetzten. Weiterhin ist es vorgesehen, dass die Schallabsorptionsschicht 20 auf die Entdröhnungsschicht 10 und/oder das Versteifungselement 1 aufkaschiert wird.

In der **Fig. 2** ist ein Versteifungselement 11 für das Verkleidungselement 1 gemäß der bevorzugten Ausführungsform der vorliegenden Erfindung in einer Draufsicht auf die Haupterstreckungsebene HSE dargestellt. In dem dargestellten Ausführungsbeispiel sind die Freiflächen F durch erste Streben 41 und zweite Streben 42 voneinander getrennt. Insbesondere nimmt dabei ein Flächenverhältnis der ersten Streben 41 und/oder der zweiten Streben 42 zu den Freiflächen F einen Wert zwischen 0,01 und 0,8, bevorzugt zwischen 0,05 und 0,65 und besonders bevorzugt zwischen 0,1 und 0,26 an. Trotz dieses vergleichsweise großen Anteils an Freiflächen F hat es sich gezeigt, dass sich ein Vergrößerung der Steifigkeit mit einer solcher Geometrie einstellen lässt. Weiterhin ist es vorgesehen, dass die Freiflächen F in der Haupterstreckungsebene HSE einen polygonalen Querschnitt aufweisen. In dem dargestellten Beispiel hat der Querschnitt einen im Wesentlichen rautenförmigen Querschnitt. Insbesondere wird der Querschnitt durch den schrägen Verlauf von ersten Streben 41 und zweiten Streben 42 zueinander realisiert, wobei sich die ersten Streben 41 und die zweiten Streben zur Bildung des Gitters in Knotenpunkten K treffen bzw. überschneiden. Dabei sind Knotenpunkt K in einer Querrichtung R1 gesehen durch eine erste Distanz Di1 voneinander getrennt und in einer senkrecht zur Querrichtung R1 verlaufenden Längsrichtung R2 durch eine zweite Distanz Di2 voneinander getrennt. Hierbei ist es insbesondere vorgesehen, dass sich die erste Distanz Di1 von der zweiten Distanz Di2 unterscheidet. In der Figur 2 ist beispielhaft ein Knotenpunkt K im Detail dargestellt. Es ist für den Fachmann ersichtlich, dass diese Gestalt nicht auf einen der Knotenpunkte K beschränkt ist, sondern eine Vielzahl, insbesondere die Mehrheit, aller Knotenpunkte K so gestaltet sein können. Dabei ist das Versteifungselement 11 vorzugsweise im Bereich der Knotenpunkte K in einer parallel zur Haupterstreckungsebene HSE verlaufenden Richtung verbreitertet gegenüber einer in derselben Richtung bemessenen Breite der ersten Strebe 41 und/oder der zweiten Strebe 42. Insbesondere ist der Knotenpunkt entlang der Querrichtung R1 und/oder Längsrichtung R2 verbreitert.

### Bezugszeichenliste

- 1: Verkleidungselement
- 10: Entdröhnungsschicht
- 11: Versteifungselement
- 15: Anordnungsseite
- 16: Außenseite
- 20: Schallabsorptionsschicht
- 30: Bauteil
- 41: erste Strebe
- 42: zweite Strebe
- A1: erster Abstand
- A2: zweiter Abstand
- D1: erste Dicke
- D2: zweite Dicke
- D3: dritte Dicke
- Di1: erste Distanz
- Di2: zweiter Distanz
- F: Freifläche
- R: Richtung
- R1: Querrichtung
- R2: Längsrichtung
- HSE: Haupterstreckungsebene
- K: Knotenpu

## Patentansprüche

1. Verkleidungselement (1) zum Entdröhnen eines Bauteils (30), insbesondere eines Fahrzeugbauteils, umfassend
- eine sich im Wesentlichen entlang einer Haupterstreckungsebene (HSE) erstreckende Entdröhnungsschicht (10) und
- ein Versteifungselement (11),
wobei das Versteifungselement (11) in oder an der Entdröhnungsschicht (10) angeordnet und gitterförmig ausgestaltet ist, **dadurch gekennzeichnet, dass** die Entdröhnungsschicht (10) Butylkautschuk umfasst.

2. Verkleidungselement (1) gemäß einem der vorhergehenden Ansprüche, wobei das Versteifungselement (11) unbehandelt, insbesondere wärmbehandlungsfrei, ist.

3. Verkleidungselement (1) gemäß einem der vorhergehenden Ansprüche, wobei das Versteifungselement (11) erste Streben (41) und zweite Streben (42) aufweist, die derart ausgerichtet sind, dass sie Freiflächen (F) voneinander trennen, wobei vorzugsweise ein in der Haupterstreckungsebene (HSE) bemessenes Flächenverhältnis der ersten Streben (41) und/oder der zweiten Streben (42) zu den Freiflächen einen Wert zwischen 0,01 und 0,8, bevorzugt zwischen 0,05 und 0,65 und besonders bevorzugt zwischen 0,1 und 0,26 annimmt.

4. Verkleidungselement (1) gemäß einem der vorhergehenden Ansprüche, wobei das Versteifungselement (11) aus einem Metall, insbesondere Aluminium, gefertigt ist.

5. Verkleidungselement (1) gemäß einem der vorhergehenden Ansprüche, wobei die Entdröhnungsschicht (10) ein Flächengewicht zwischen 1 kg/m² und 8 kg/m², bevorzugt zwischen 2,5 kg/m² und 6,5 kg/m² und bevorzugt zwischen 3,5 kg/m² und 4,5 kg/m² aufweist.

6. Verkleidungselement (1) gemäß einem der vorhergehenden Ansprüche, wobei die Entdröhnungsschicht (10) einen Füllstoff aufweist.

7. Verkleidungselement (1) gemäß einem der vorhergehenden Ansprüche, wobei die Entdröhnungsschicht (10) in einer senkrecht zur Haupterstreckungsebene (HSE) verlaufenden Richtung (R) eine erste Dicke (D1) aufweist, wobei die erste Dicke (D1) einen Wert zwischen 1 mm und 8 mm, bevorzugt zwischen 1,2 und 6 mm und besonders bevorzugt zwischen 4 mm und 6 mm aufweist oder im Wesentlichen einen Wert von 4,5 mm annimmt.

8. Verkleidungselement (1) gemäß einem der vorhergehenden Ansprüche, wobei das Verkleidungselement (1) eine Anordnungsseite (15), die im montiertem Zustand des Verkleidungselements (1) dem Bauteil (30) zugewandt ist, und eine der Anordnungsseite (15) gegenüberüberliegende Außenseite (16) aufweist, wobei das Versteifungselement (11) zwischen der Anordnungsseite (15) und der Außenseite (16) angeordnet ist.

9. Verkleidungselement (1) gemäß Anspruch 8, wobei das Versteifungselement (11) in einer senkrecht zur Haupterstreckungsebene (HSE) verlaufenden Richtung gesehen um einen ersten Abstand (A1) von der Anordnungsseite (15) und um einen zweiten Abstand (A2) von der Außenseite (16) versetzt ist, wobei der erste Abstand (A1) größer ist als der zweite Abstand (A2).

10. Verkleidungselement (1) gemäß Anspruch 9, wobei ein Verhältnis vom zweiten Abstand (A2) zum ersten Abstand (A1) einen Wert zwischen 0,65 und 0,98, bevorzugt zwischen 0,75 und 0,98 und besonders bevorzugt zwischen 0,85 und 0,95 annimmt.

11. Verkleidungselement (1) gemäß einem der vorhergehenden Ansprüche, wobei eine Schallabsorptionsschicht (20) an der Außenseite (16) des Verkleidungselements (1) angeordnet ist.

12. Verkleidungselement (1) gemäß einem der vorhergehenden Ansprüche, wobei sich die ersten Streben (41) und die zweiten Streben (42) in Knotenpunkten (K) überschneiden, wobei Knotenpunkte (K) in einer Querrichtung (R1) über eine erste Distanz (Di1) zueinander beabstandet sind und in einer senkrecht zur Querrichtung (R1) verlaufenden Längsrichtung (R2) über eine zweite Distanz (Di2) zueinander beabstandet sind, wobei sich insbesondere die erste Distanz (Di1) von der zweiten Distanz (Di2) unterscheidet.

13. Verfahren zum Entdröhnen eines Bauteils (30), insbesondere eines Fahrzeugbauteils, wobei das Verkleidungselement (1) gemäß einem der vorhergehenden Ansprüche mit dem Bauteil (30), insbesondere form- und/oder stoffschlüssig mit dem Bauteil (30), verbunden wird.

14. Verfahren zum Herstellen eines Verkleidungselements (1) gemäß einem der Ansprüche 1 bis 12, umfassend:
Bereitstellen einer Entdröhnungsschicht (10) und eines gitterförmigen Versteifungselements (11), und
Zusammenfügen der Entdröhnungsschicht (10) und des gitterförmigen Versteifungselements (11), vorzugsweise durch Laminieren.

15. Verwendung des Verkleidungselements (1) gemäß einem der Ansprüche 1 bis 12 zum Entdröhnen eines Fahrzeugbauteils, insbesondere eines Fahrzeugkarosseriebauteils.

## Claims

1. A cladding element (1) for damping a component (30), in particular a vehicle component, comprising
- a damping layer (10) extending substantially along a main extension plane (MEP), and
- a stiffening element (11),
wherein the stiffening element (11) is arranged in or on the damping layer (10) and is grid-shaped, **characterized in that** the damping layer (10) comprises butyl rubber.

2. The cladding element (1) according to any one of the preceding claims,
wherein the stiffening element (11) is untreated, in particular free of heat treatment.

3. The cladding element (1) according to any one of the preceding claims,
wherein the stiffening element (11) comprises first struts (41) and second struts (42) aligned so as to separate free surfaces (F) from each other,
wherein preferably an area ratio of the first struts (41) and/or the second struts (42) to the free surfaces, measured in the main extension plane (MEP), assumes a value between 0.01 and 0.8, preferably between 0.05 and 0.65 and more preferably between 0.1 and 0.26.

4. The cladding element (1) according to any one of the preceding claims, wherein the stiffening element (11) is made of a metal, in particular aluminium.

5. The cladding element (1) according to any one of the preceding claims, wherein the damping layer (10) has a weight per unit area of between 1 kg/m² and 8 kg/m², preferably between 2.5 kg/m² and 6.5 kg/m² and preferably between 3.5 kg/m² and 4.5 kg/m².

6. The cladding element (1) according to any one of the preceding claims, wherein the damping layer (10) comprises a filling material.

7. The cladding element (1) according to any one of the preceding claims, wherein the damping layer (10) has a first thickness (D1) in a direction (R) perpendicular to the main extension plane (MEP), wherein the first thickness (D1) has a value between 1 mm and 8 mm, preferably between 1.2 and 6 mm and more preferably between 4 mm and 6 mm or substantially assumes a value of 4.5 mm.

8. The cladding element (1) according to any one of the preceding claims, wherein the cladding element (1) has an arrangement side (15), which faces the component (30) in the assembled state of the cladding element (1), and an outer side (16) opposite the arrangement side (15), wherein the stiffening element (11) is arranged between the arrangement side (15) and the outer side (16).

9. The cladding element (1) according to claim 8, wherein the stiffening element (11) is offset from the arrangement side (15) by a first distance (A1) and from the outer side (16) by a second distance (A2), viewed in a direction perpendicular to the main extension plane (MEP), wherein the first distance (A1) is greater than the second distance (A2).

10. The cladding element (1) according to claim 9, wherein a ratio of the second distance (A2) to the first distance (A1) assumes a value between 0.65 and 0.98, preferably between 0.75 and 0.98 and more preferably between 0.85 and 0.95.

11. The cladding element (1) according to any one of the preceding claims, wherein a sound absorption layer (20) is arranged on the outer side (16) of the cladding element (1).

12. The cladding element (1) according to any one of the preceding claims, wherein the first struts (41) and the second struts (42) intersect at nodal points (K), wherein nodal points (K) are spaced apart from one another over a first distance (Di1) in a transverse direction (R1) and are spaced apart from one another over a second distance (Di2) in a longitudinal direction (R2) running perpendicular to the transverse direction (R1), wherein in particular the first distance (Di1) differs from the second distance (Di2).

13. A method for damping a component (30), in particular a vehicle component, wherein the cladding element (1) according to any one of the preceding claims is connected to the component (30), in particular in a form-fitting and/or material-fitting manner to the component (30).

14. A method for producing a cladding element (1) according to any one of claims 1 to 12, comprising:
Providing a damping layer (10) and a grit-shaped stiffening element (11), and joining the damping layer (10) and the grit-shaped stiffening element (11), preferably by lamination.

15. A use of the cladding element (1) according to any one of claims 1 to 12 for the damping of a vehicle component, in particular a vehicle body component.

## Revendications

1. Élément d'habillage (1) pour insonoriser un composant (30), en particulier un composant de véhicule, comprenant
- une couche d'insonorisation (10) s'étendant sensiblement le long d'un plan d'extension principale (HSE), et
- un élément de raidissement (11),
l'élément de raidissement (11) étant disposé dans ou sur la couche d'insonorisation (10) et étant conçu en forme de grille,
**caractérisé en ce que** la couche d'insonorisation (10) comprend du caoutchouc butyle.

2. Élément d'habillage (1) selon l'une des revendications précédentes, dans lequel l'élément de raidissement (11) est sans traitement, en particulier sans traitement thermique.

3. Élément d'habillage (1) selon l'une des revendications précédentes,
dans lequel l'élément de raidissement (11) comprend des premières entretoises (41) et des deuxièmes entretoises (42) qui sont orientées de manière à séparer des surfaces libres (F) les unes des autres, et
de préférence, un rapport de surface desdites premières entretoises (41) et/ou desdites deuxièmes entretoises (42), mesuré dans le plan d'extension principale (HSE), sur lesdites surfaces libres prend une valeur comprise entre 0,01 et 0,8, de préférence entre 0,05 et 0,65 et manière particulièrement préférée entre 0,1 et 0,26.

4. Élément d'habillage (1) selon l'une des revendications précédentes, dans lequel l'élément de raidissement (11) est fabriqué en un métal, en particulier en aluminium.

5. Élément d'habillage (1) selon l'une des revendications précédentes, dans lequel la couche d'insonorisation (10) présente un poids par unité de surface compris entre 1 kg/m² et 8 kg/m², de préférence entre 2,5 kg/m² et 6,5 kg/m² et de manière particulièrement préférée entre 3,5 kg/m² et 4,5 kg/m².

6. Élément d'habillage (1) selon l'une des revendications précédentes, dans lequel la couche d'insonorisation (10) comprend un agent de charge.

7. Élément d'habillage (1) selon l'une des revendications précédentes,
dans lequel la couche d'insonorisation (10) présente une première épaisseur (D1) dans une direction (R) perpendiculaire au plan d'extension principale (HSE), et
la première épaisseur (D1) prend une valeur comprise entre 1 mm et 8 mm, de préférence entre 1,2 et 6 mm et de manière particulièrement préférée entre 4 mm et 6 mm, ou prend sensiblement une valeur de 4,5 mm.

8. Élément d'habillage (1) selon l'une des revendications précédentes, l'élément d'habillage (1) présentant un côté agencement (15) qui, à l'état monté de l'élément d'habillage (1), est tourné vers le composant (30), et un côté extérieur (16) opposé au côté agencement (15), l'élément de raidissement (11) étant agencé entre le côté agencement (15) et le côté extérieur (16).

9. Élément d'habillage (1) selon la revendication 8,
dans lequel l'élément de raidissement (11) est décalé d'une première distance (A1) par rapport au côté agencement (15) et d'une deuxième distance (A2) par rapport au côté extérieur (16), vu dans une direction perpendiculaire au plan d'extension principale (HSE), et
la première distance (A1) est supérieure à la deuxième distance (A2).

10. Élément d'habillage (1) selon la revendication 9,
dans lequel un rapport de la deuxième distance (A2) sur la première distance (A1) prend une valeur comprise entre 0,65 et 0,98, de préférence entre 0,75 et 0,98 et de manière particulièrement préférée entre 0,85 et 0,95.

11. Élément d'habillage (1) selon l'une des revendications précédentes, dans lequel une couche d'absorption acoustique (20) est agencée sur le côté extérieur (16) de l'élément d'habillage (1).

12. Élément d'habillage (1) selon l'une des revendications précédentes, dans lequel les premières entretoises (41) et les deuxièmes entretoises (42) se croisent à des points en nœuds (K), les points en nœuds (K) étant espacés les uns des autres sur une première distance (Di1) dans une direction transversale (R1) et étant espacés les uns des autres sur une deuxième distance (Di2) dans une direction longitudinale (R2) s'étendant perpendiculairement à la direction transversale (R1), et
en particulier, la première distance (Di1) est différente de la deuxième distance (Di2).

13. Procédé d'insonorisation d'un composant (30), en particulier d'un composant de véhicule, dans lequel l'élément d'habillage (1) selon l'une des revendications précédentes est relié au composant (30), en particulier il est relié au composant (30) par coopération de forme et/ou de matière.

14. Procédé de fabrication d'un élément d'habillage (1) selon l'une des revendications 1 à 12, consistant à :
fournir une couche d'insonorisation (10) et un élément de raidissement en forme de grille (11), et
assembler la couche d'insonorisation (10) et l'élément de raidissement en forme de grille (11), de préférence par laminage.

15. Utilisation de l'élément d'habillage (1) selon l'une des revendications 1 à 12 pour insonoriser un composant de véhicule, en particulier un composant de carrosserie de véhicule.
